# EUROPEAN PATENT SPECIFICATION

(11) **EP 2 224 355 B1**
(45) Date of publication and mention of the grant of the patent: **25.10.2023**
(21) Application number: 09154017.9
(22) Date of filing: 27.02.2009
(51) Int. Cl.: G06F 16/9537, G06Q 30/0241

(54) **Wireless communications system providing advertising-based mobile device navigation features and related methods**
Drahtloses Kommunikationssystem mit werbebasierten mobilen Gerätesuchmerkmalen und zugehörigen Verfahren
Système de communications sans fil mobile fournissant des propriétés de navigation de dispositif mobile de type publicité et procédés correspondants

(43) Date of publication of application: 01.09.2010
(60) Divisional application: 20207051.2
(73) Proprietor: BlackBerry Limited, Waterloo, ON N2K 0A7 (CA)
(72) Inventor: Tysowski, Piotr K, Waterloo, Ontario N2L 3W8 (CA)
(74) Representative: Murgitroyd & Company

(56) References cited:
- EP-A2- 1 168 286
- JP-A- 2001 280 981
- US-A1- 2003 065 805
- US-A1- 2008 139 181
- US-A1- 2009 005 973

## Description

### Technical Field

The present disclosure relates to the field of communications systems, and, more particularly, to mobile wireless communications systems and related methods.

### Background

Mobile communications systems continue to grow in popularity and have become an integral part of both personal and business communications. Mobile telephones allow users to place and receive voice calls most anywhere they travel. Moreover, as mobile telephone technology has increased, so too has the functionality of mobile devices and the different types of devices available to users. For example, many mobile devices now incorporate personal digital assistant (PDA) features such as calendars, address books, task lists, etc. Moreover, such multi-function devices may also allow users to wirelessly send and receive electronic mail (email) messages and access the Internet via a cellular network and/or a wireless local area network (WLAN), for example.

As a result, users continue to spend more time using their mobile devices during the course of a day performing information searches, reading emails, etc., as opposed to early cellular phones that were used only for phones calls. This has resulted in a significant interest from the advertising community in targeting advertisements to mobile devices.

A method for measuring the effectives of advertisements presented on a mobile navigation device is disclosed in U.S. Patent Pub. No. 2008/0139181. Information is stored on the device and then accessed by a server or the advertiser. The method involves tracking device location, presenting to the user an advertisement or point of interest, storing click-throughs on the advertisement or point of interest to mark a first success, and monitoring device current position to determine whether the device reaches a location associated with the advertisement or point of interest to mark a second success, counting successes. Further, success feedback is provided to the advertiser, for example, through server queries. EP1168286 discloses a mobile advertisement information delivering method, comprising delivering advertisement information from an advertisement information delivery apparatus to a mobile communication instrument, based on a current position information transmitted from the mobile communication instrument.

Despite the potential advantages of such approaches, further approaches may be desirable for reaching mobile device users with advertising, particularly mobile devices with navigation functionality.

### Summary

The scope of the invention is defined by the claims.

### Brief Description of the Drawings

FIG. 1 is a schematic block diagram of a wireless communications system in accordance with one exemplary embodiment providing mobile advertising with a navigation application.
FIG. 2 is a schematic block diagram of an alternative embodiment of the system of FIG. 1.
FIG. 3 is a front view of the display of the mobile wireless communications device of FIG. 2 in which displayed navigation information has been updated to include a location associated with an advertisement point-of-interest (POI).
FIGS. 4, 5A, and 5B are flow diagrams illustrating method aspects for providing mobile advertising with a navigation application.
FIG. 6 is a schematic block diagram illustrating exemplary components of a mobile wireless communications device that may be used in accordance with the system of FIG. 1.

### Detailed Description

The present description is made with reference to the accompanying drawings, in which various embodiments are shown. These embodiments are provided so that this disclosure will be thorough and complete.Like numbers refer to like elements throughout, and prime notation is used to indicate similar elements or steps in alternative embodiments.

Generally speaking, a wireless communications system is disclosed herein which may include a notification (e.g., advertising) server and at least one mobile wireless communications device. The at least one mobile wireless communications device may include an output device, a position determining device, and a processor. The processor may be configured to obtain at least one notification (e.g., advertisement) from the advertising server, determine a current location based upon the position determining device, and output the at least one advertisement via the output device. The processor may also be configured to selectively output navigation information for a route from the current location to a destination location via the output device based upon the at least one advertisement being output.

More particularly, the output device may include a display. As such, the processor may further display a point-of-interest (POI) icon corresponding to the at least one advertisement on the display with the navigation information. Also, the mobile device may further include an input device, and the POI icon may be selectable based upon the input device. Furthermore, the processor may update the navigation information to include a location associated with the POI icon based upon selection thereof.

The processor may selectively output the navigation information based upon an acknowledgement of the at least one advertisement provided via the input device. Moreover, the processor may output the at least one advertisement at a recurring time interval for acknowledgement. In some embodiments, the output device may include an audio output device. As such, the navigation information may include audio navigation information, and the at least one advertisement may include at least one audio advertisement. The processor may therefore selectively output the audio navigation information via the audio output device based upon the at least one audio advertisement being output at a volume level above a threshold level.

In addition, the at least one advertisement may include a plurality of different advertisements, and at least one of the advertising server and the processor may select the advertisements for outputting based upon the current location. Furthermore, at least one of the advertising server and the processor may also select the advertisements for outputting based upon a user preference profile associated with the at least one mobile wireless communications device.

The navigation information may include road intersection information, for example. Accordingly, the processor may advantageously not output the at least one advertisement while the at least one mobile wireless communications device is moving and within a given distance of an intersection. Also by way of example, the processor may output the at least one advertisement on the display while the at least one mobile wireless communications device is moving at a speed below a speed threshold. The at least one mobile wireless communications device may also include a wireless transceiver cooperating with the processor for receiving the at least one advertisement from the advertising server.

A mobile wireless communications device, such as the one discussed briefly above, and a related wireless communications method for use with such a mobile wireless communications device are also provided. The method may include providing at least one advertisement from the advertising server to the at least one mobile wireless communications device, determining a current location of the at least one mobile wireless communications device based upon the position determining device, and outputting at least one advertisement via the output device. The method may further include selectively outputting navigation information for a route from the current location to a destination location via the output device based upon the at least one advertisement being output.

A related computer-readable medium may have computer-executable instructions (or modules) for causing a mobile wireless communication device, such as the one described briefly above, to perform steps including obtaining at least one advertisement from an advertising server, determining a current location based upon the position determining device, and outputting at least one advertisement via the output device. The steps may further include selectively outputting navigation information for a route from the current location to a destination location via the output device based upon the at least one advertisement being output.

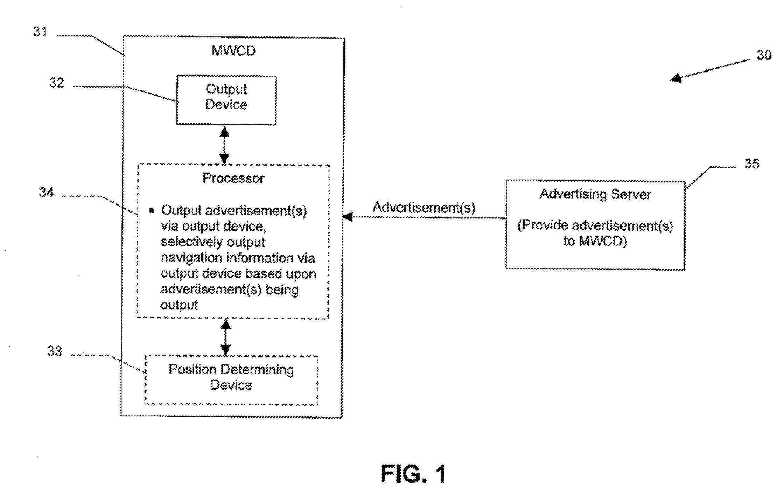

Referring initially to FIG. 1, a wireless communications system **30** is first described. The system **30** illustratively includes one or more mobile wireless communications devices **31** (MWCDs), which includes an output device **32,** a position determining device **33,** and a processor **34.** By way of example, the position determining device **33** may be a Global Positioning System (GPS) device, although other suitable types of position determining devices may also be used, such as the Russian Global Navigation Satellite System (GLONASS), the European Galileo positioning system, the COMPASS navigation system of China, IRNSS of India, or DORIS of France, for example, as well as ground-based position determining systems, as will be appreciated by those skilled in the art. In addition, the processor **34** may be implemented using a combination of hardware and software components, including a microprocessor, memory, etc., for example, as will also be appreciated by those skilled in the art. The system **30** further illustratively includes an advertising server **35** for providing advertisements to the mobile device **31,** as will be discussed further below.

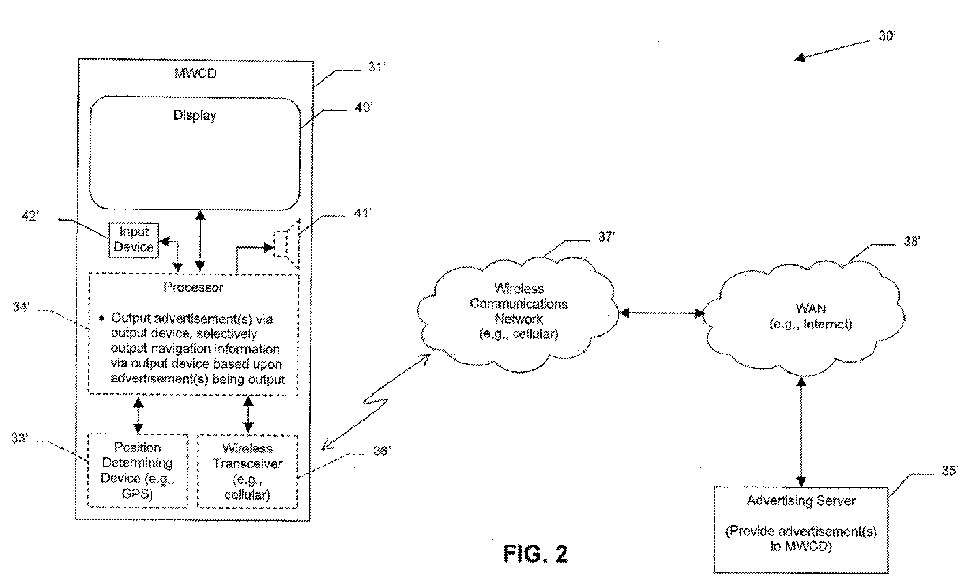

Referring additionally to the alternative embodiment of the system **30'** shown in FIG. 2, the mobile device **31'** also illustratively includes a wireless transceiver **36'** and associated antenna(s) (not shown), which may be an internal antenna(s), external antenna(s), or both. Moreover, the system **30'** further illustratively includes a wireless communications network **37',** and the advertising server **35'** communicates with the mobile device **31'** via the wireless communications network. More particularly, the advertising server **35'** illustratively communicates with the wireless communications network **34** via a wide area network (WAN) **38',** which in the present example is the Internet.

By way of example, the mobile device **31'** and wireless communications network **37'** may operate in accordance with a cellular, wireless LAN (e.g., 802.11x, Bluetooth, etc.), WiMAX, satellite, etc., communications format, as will be appreciated by those skilled in the art. In some embodiments, more than one such wireless communications format may be used in the same device (e.g., cellular, wireless LAN, and Bluetooth). Various types of mobile devices **31'** may be used, such as mobile phones, PDAs, laptop computers, wireless-enabled cameras, wireless-enabled media players, etc., for example,

In the embodiment illustrated in FIG. 2, there are two different output devices, namely a display **40'** and an audio output device **41'** (e.g., a speaker). By way of example, the display **36** may be a liquid crystal display (LCD), although other suitable display types may also be used, as will be appreciated by those skilled in the art. The mobile device **31'** also illustratively includes an input device **42'.** Various types of input devices **42'** may be used, such as a track ball, thumb wheel, directional (up, down, left, right, etc.) buttons, a sensory contact layer for a touch screen display, etc., as will also be appreciated by those skilled in the art.

By way of background, various cost models are used for providing navigation or map-based information to users. One approach is to provide such information for little or no fee to the user, but coupled with advertising to cover the cost. one example is the MapQuest^{®} service, which provides Internet-based mapping in which sponsored links are displayed beside a map screen, which may be based upon the input address used for the map search. However, with such services the advertisements are typically located to the sides of the map screen, and therefore do not necessarily require that a user look at them. That is, with this advertising approach there is no assurance that the user has viewed the advertisements at all, and hence brand recall is not assured.

Another example is Tele Atlas 8Y of the Netherlands, a digital map data provider which offers branded point of interest (POI) markers for digital maps. The POI markers are essentially bitmaps displayed on POI markers on the map screen for sponsors. These visual brand depictions may be displayed as results in a specific POI search.

Another model for providing navigation information on mobile devices (e.g., cellular devices) is the fee-based approach. For example, with fee-based navigation services, the user pays a monthly charge of approximately $10-15. This includes the ability to specify a start and end point, and receive dynamic turn-by-turn driving instructions, possibly voice-enabled. The reason for the cost is that location-based services have become a revenue source for cellular carriers as they offer recurring and high-margin revenue streams. In many cases, the user finds that he or she pays for GPS hardware capability when purchasing his or her mobile device, but then finds that he/she cannot afford the "accompanying" navigation service, and may even be restricted from free mapping applications due to the adopted security model of the carrier which enforces subscriptions.

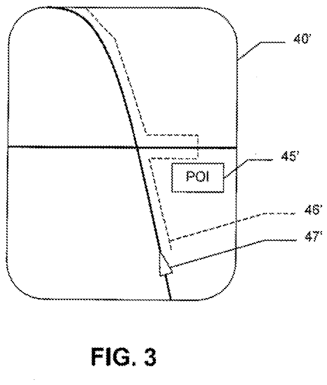

The system **30** and methods set forth herein may advantageously provide navigation services for mobile devices that is not based on a user subscription service, nor a pay-per-use model, but instead is an advertisement-based service that provides effective presentation of advertising with improved levels of user attention thereto. Referring now additionally to FIGS. 3-5B, beginning at Block **60,** the processor **34** obtains one or more advertisements from the advertising server **35,** at Block **61,** and determines a current location of the mobile device **31** based upon the position determining device **33,** at Block **62.**

Various approaches may be used for obtaining the advertisements from the advertising server **35.** For example, this may be done wirelessly, such as through the wireless (e.g., cellular) communications network **37'** when a user first requests a route be calculated to a destination, as the mobile device **31'** is traveling along a route, or both. Moreover, advertisements may also be downloaded "offline," for example, by connecting the mobile device **31'** to a personal computer with Internet access via a USB port, etc., or by downloading advertising data to a removable memory card, or both. Moreover, downloading of advertisements may be performed on a push or pull basis (or both), meaning that initiation of advertisement downloading is controlled by the mobile device **31** or by the advertising server **35,** as will be appreciated by those skilled in the art. That is, either the processor **34** or advertising server **35** (or both) may be programmed to download appropriate advertisements for the mobile device **31** at designated times, as will be discussed further below. For an offline implementation, the processor **34** may require new advertisements to be downloaded after a certain time period, a certain number of routes have been calculated, etc., to continue use of the navigation features.

Navigation information for a route from the current location to a destination location may be determined, at Block **63.** This determination may be performed by the processor **34** or the advertising server **35** (or both), or some other navigation service (e.g., a third-party navigation server, for example). In accordance with one exemplary implementation, the processor **34** may perform the necessary calculations based upon road or map data associated with a navigation application to determine a route to the desired destination including directions, route markers, times, distances, etc., as will be appreciated by those skilled in the art.

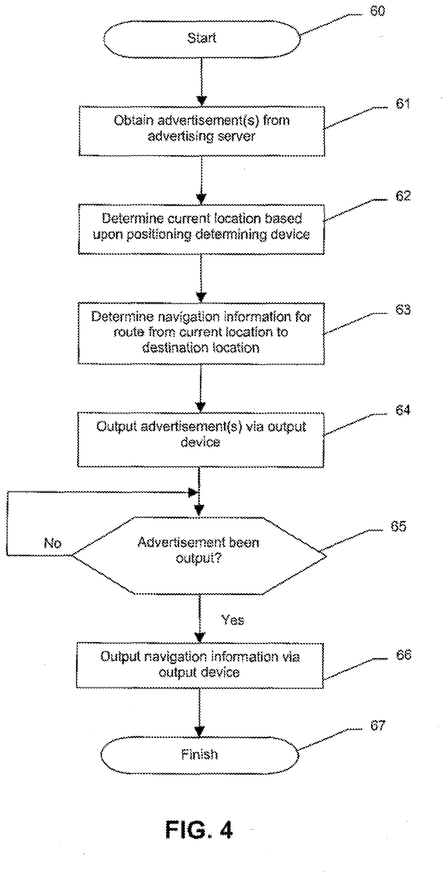

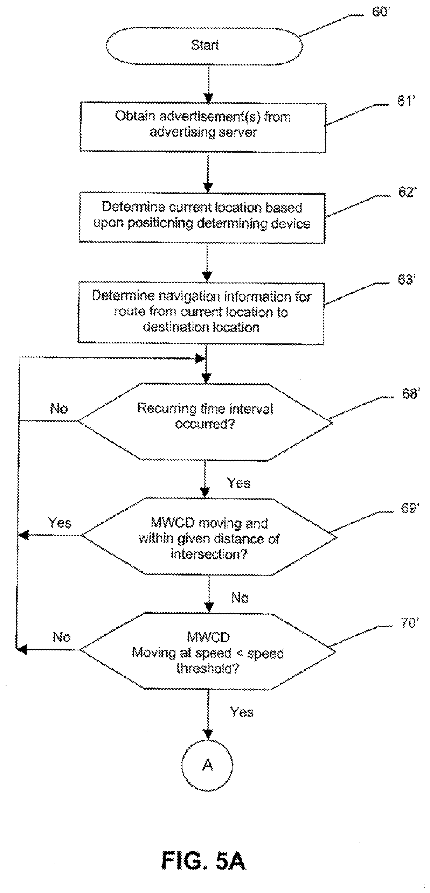

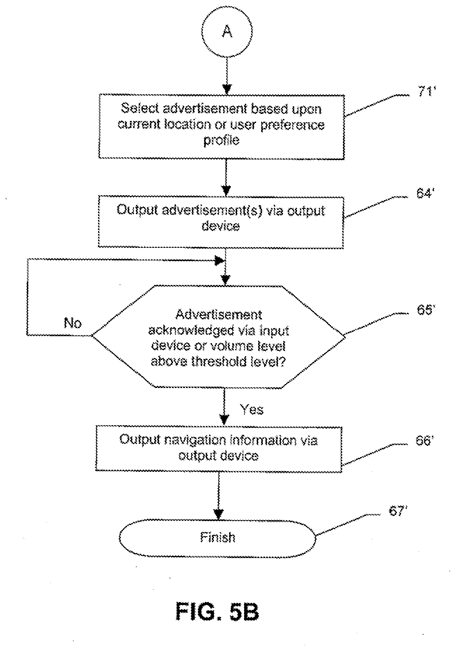

Furthermore, the processor **34** also outputs the advertisement(s) via the output device **32,** and selectively outputs the navigation information via the output device based upon the advertisement(s) being output, at Blocks **64-66,** thus concluding the method illustrated in FIG. 4 (Block **67**). Outputting of the advertisements may take different forms in different embodiments. For example, the advertisements may be visual advertisements output on the display **40'.** As such, the processor **34'** may selectively output the navigation information based upon an acknowledgement of the advertisement provided via the input device **42',** at Block **65'** (FIG. 5B). That is, the user may be required to click an "OK" button, etc., on the display using the input device **42'** acknowledging that the user has indeed observed the advertisement, prior to the processor **34'** outputting the navigation information, which may be done on the display **40*,** audibly via the speaker **41',** or both.

Another option is that the advertisement will be displayed for a certain period of time (e.g., five or more seconds) without the user being able to clear the display **40*** before the navigation information is provided. Generally speaking, the interval over which the advertisement is to be displayed in such cases should be set for a reasonable amount of time to provide a significant likelihood that the user will in fact notice the advertisement, but yet not so long that it will be a significant annoyance to the user or interfere with the user's ability to obtain directions in a timely fashion. It should be noted that visual advertisements may be accompanied by audio advertising (or not) depending on the given embodiment (and vice-versa), and may be user-selectable in some embodiments. Moreover, advertisements may include video or animation in some embodiments, if desired.

Thus, in accordance with one example, a user may be subjected to targeted advertising via his or her mobile device **31,** but the user will not incur any additional fees for navigation service usage. If the user requests driving directions to another location, then before displaying the list of directions, or the map containing the route markers, the user is required to view an advertisement on the display **40'.** Again, the advertisements may be for businesses or events that are near the location of end point, or within proximity to the route, or both. In addition to using location as a filter for advertising, when signing up for the service, the user may be required to identify a certain number of point-of-interest (POI) categories, such as coffee houses and pubs, that will be used as filters for the ad results as part of the user's personal preference profile. To ensure viewing by the user, the user is required to dismiss or acknowledge the advertisement before the user is permitted to enter the navigation mode. Advertisements may be displayed at major waypoints of a longer route, and include local content based upon waypoint coordinates, for example. Moreover, the processor **34'** may output advertisements at a recurring time interval (i.e., on a schedule), at Block **68'.**

In some embodiments, the user may be subjected to advertising not only before navigation instructions are displayed, but also before the user's current position on a map is displayed as ascertained by GPS (or other location technology). This is in case the user is just following his or her position along on the map without having a specific route programmed. That is, providing basic location coordinates may also be regarded as a service that would require advertisement delivery. In addition, advertisements may not only be correlated with the user's current position or the route, but also with the current time, or the projected time at a destination waypoint (e.g. to serve up a time-limited coupon or make reference to an upcoming event for which tickets can be purchased).

In addition, the processor **34'** may further display a POI icon **45*** corresponding to a given advertisement on the display with the navigation information, as shown in FIG. 3. In the illustrated example, the location of the mobile device **31'** is represented by a triangular icon **47'.** As such, a user may advantageously select the POI icon **45'** using the input device **42',** indicating that the user wishes to "detour" from the current route to visit the POI. As such, the processor **34'** may advantageously update the navigation information to include a location associated with the POI icon **45'** based upon selection thereof. That is, the processor **34'** may advantageously adjust or re-calculate a route **46'** so that the route will include the POI, as shown.

By way of example, the user may be informed along a route that a restaurant has a special today only. The user may choose to ignore the advertisement (which may be visually depicted as a link on the map display, or announced by voice), or select it via the input device **42'.** Upon selection, a waypoint to the destination will be inserted into the route (as a temporary detour). These advertisements may be strategically inserted along a long route (e.g., every hour) to invite the user to take a break from driving and take advantage of a sponsor's offer, for example. Again, the user may subscribe to various specials of interest when first using the application, and the distance between rest stops or gas station stops may be adjusted by the user or .automatically calculated based on the route length and mileage, as will be appreciated by those skilled in the art. This technique allows the user to acknowledge the POI icon **45'** and to optionally have it inserted directly into the route, which also provides for advertisement effectiveness tracking, as will further be appreciated by those skilled in the art. However, the POI need not be included in the route in all embodiments, and visual or audible (or both) directions may simply be provided telling the user when an advertisement POI is nearby.

In some embodiments, the advertisement may be an audio advertisement to be played on the speaker **41',** and the navigation information may include audio navigation information, such as spoken words to indicate when a turn is required, for example, as will be appreciated by those skilled in the art. In such a configuration, the user may not be looking at the display **40'** (or there may be no display, or the display may not be used for navigation). Thus, to increase the likelihood that the user will in fact listen to the advertisement, the processor **34'** may perform various operations. One approach is to output the audio navigation information via the speaker **41'** based upon audio advertisements being output at a volume level above a threshold level, at Block **65'.** That is, the processor **34'** may require the user to have the volume of the mobile device **31'** set to a given threshold volume so that the advertisement is being played at a volume level sufficient to be heard by the user. Moreover, the threshold volume level may be changed, such as based upon a speed at which the mobile device **31'** is traveling, etc. The user may also have the option to pause an advertisement in some embodiments, in which case the processor **34'** may allow navigation information to be displayed for a short time, but then discontinue the navigation information until the advertisement playback is resumed.

In some embodiments, playback of advertisements may also be interrupted automatically by the system such that navigation instructions may be heard (e.g., when the user veers off course unexpectedly during the middle of an advertisement). The advertisement may be replayed at a later time. Another option is that the advertisement may simply be paused for the duration of the instructions.

In accordance with one exemplary audio navigation information embodiment, a pre-recorded advertisement message may be played while the mobile device **31'** is in a user-selectable voice-based navigation mode (e.g., where turn instructions are being announced). If the length of the advertisement (e.g., such advertisements are often produced in fifteen, thirty, or sixty second intervals) can fit within the time required to travel between two turns, then the advertisement may be played to the user. Again, the product/service being advertised may be selected by mining the user's destination address, POI categories of interest, user preference profile, previous searches, etc.

In this way, the user will be required to listen to advertisements while in the audible navigation mode. The advertisement may also be played back along shorter routes if a high traffic condition is detected (i.e. through a traffic information service, or by detected prolonged or slow movement along the road, using the position determining device **33'**). Thus, when the mobile device **31'** is stationary or moving at a speed less than a speed threshold (indicating the user is stopped or in traffic), at Block **70',** advertisements may generally be presented to the user in a safer manner. That is, if the mobile device **31'** is moving and is within a given distance of an intersection (including road crossings, highway exits, etc.), the user may be more likely in need of the navigational information to ensure that he or she is taking the correct turn or exit. As such, playing or displaying an advertisement at such time could cause a distraction if the user is driving that in turn may result in an accident. However, it should be noted that the advertisement information may also be displayed while the mobile device **31'** is traveling at highway speeds as well in some embodiments, and need not be displayed only when traveling slowly or at a standstill.

In addition to selecting advertisements to download based upon the location, user preference profile, etc., the actual advertisements to be displayed may be selected based upon this information as well. That is, a number of advertisements may be downloaded corresponding to different locations, advertisement types, etc., and the processor **34'** may advantageously select which of these advertisements are appropriate based upon the current location, user preference profile, etc.

A related computer-readable medium may have computer-executable instructions (or modules) for causing a mobile device **31** to perform steps including obtaining at least one advertisement from an advertising server **35,** determining a current location based upon its position determining device **33,** and determining navigation information for a route from the current location to a destination location. The steps may further include outputting at least one advertisement via the output device **32,** and selectively outputting the navigation information via the output device based upon the advertisement(s) being output, as discussed further above.

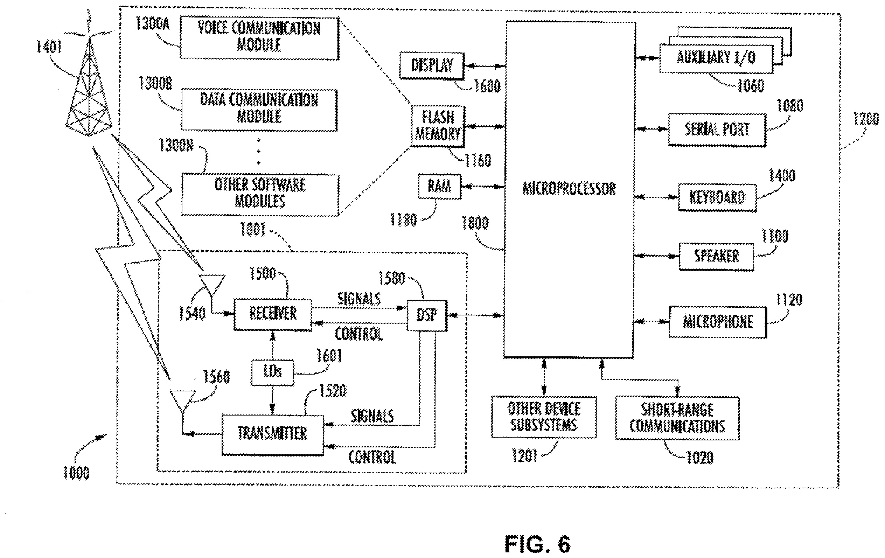

Exemplary components of a mobile wireless communications device **1000** that may be used in accordance with the system **30** are further described in the example below with reference to FIG. 6. The device **1000** illustratively includes a housing **1200,** a key pad **1400** and an output device **1600.** The output device shown is a display **1600,** which may comprise a full graphic LCD. In some embodiments, display **1600** may comprise a touch-sensitive input and output device. other types of output devices may alternatively be utilized. A processing device **1800** is contained within the housing **1200** and is coupled between the key pad **1400** and the display **1600.** The processing device **1800** controls the operation of the display **1600,** as well as the overall operation of the mobile device **1000,** in response to actuation of keys on the key pad **1400** by the user. In some embodiments, key pad **1400** may comprise a physical key pad or a virtual key pad (e.g., using a touch-sensitive interface) or both.

The housing **1200** may be elongated vertically, or may take on other sizes and shapes (including clamshell housing structures). The key pad **1400** may include a mode selection key, or other hardware or software for switching between text entry and telephony entry.

In addition to the processing device **1800,** other parts of the mobile device **1000** are shown schematically in FIG. 6. These include a communications subsystem **1001;** a short-range communications subsystem **1020;** the key pad **1400** and the display **1600,** along with other input/output devices **1060, 1080, 1100** and **1120;** as well as memory devices **1160, 1180** and various other device subsystems **1201.** The mobile device **1000** may comprise a two-way RF communications device having voice and data communications capabilities. In addition, the mobile device **1000** may have the capability to communicate with other computer systems via the Internet.

Operating system software executed by the processing device **1800** may be stored in a persistent store, such as the flash memory **1160,** but may be stored in other types of memory devices, such as a read only memory (ROM) or similar storage element. In addition, system software, specific device applications, or parts thereof, may be temporarily loaded into a volatile store, such as the random access memory (RAM) **1180.** Communications signals received by the mobile device may also be stored in the RAM **1180**.

The processing device **1800,** in addition to its operating system functions, enables execution of software applications **1300A-1300N** on the device **1000.** A predetermined set of applications that control basic device operations, such as data and voice communications **1300A** and **1300B,** may be installed on the device **1000** during manufacture. In addition, a personal information manager (PIN) application may be installed during manufacture. The PIM may be capable of organizing and managing data items, such as e-mail, calendar events, voice mails, appointments, and task items. The PIM application may also be capable of sending and receiving data items via a wireless network **1401,** The PIM data items may be seamlessly integrated, synchronized and updated via the wireless network **1401** with the device user's corresponding data items stored or associated with a host computer system.

Communication functions, including data and voice communications, are performed through the communications subsystem **1001.** and possibly through the short-range communications subsystem. The communications subsystem **1001** includes a receiver **1500,** a transmitter **1520.** and one or more antennas **1540** and **1560.** In addition, the communications subsystem **1001** also includes a processing module, such as a digital signal processor (DSP) **1580,** and local oscillators (LOs) **1601.** The specific design and implementation of the communications subsystem **1001** is dependent upon the communications network in which the mobile device **1000** is intended to operate. For example, a mobile device **1000** may include a communications subsystem **1001** designed to operate with the Mobitex^{™}, Data TAC^{™} or General Packet Radio Service (GPRS) mobile data communications networks, and also designed to operate with any of a variety of voice communications networks, such as AMPS, TDMA, CDMA, WCDMA, PCS, GSM, EDGE, etc. Other types of data and voice networks, both separate and integrated, may also be utilized with the mobile device **1000.** The mobile device **1000** may also be compliant with other communications standards such as 3GSM, 3G, UMTS, 4G, etc.

Network access requirements vary depending upon the type of communication system. For example, in the Mobitex and DataTAC networks, mobile devices are registered on the network using a unique personal identification number or PIN associated with each device. In GPRS networks, however, network access is associated with a subscriber or user of a device. A GPRS device therefore utilizes a subscriber identity module, commonly referred to as a SIM card, in order to operate on a GPRS network.

When required network registration or activation procedures have been completed, the mobile device **1000** may send and receive communications signals over the communication network **1401.** Signals received from the communications network **1401** by the antenna **1540** are routed to the receiver **1500,** which provides for signal amplification, frequency down conversion, filtering, channel selection, etc., and may also provide analog to digital conversion. Analog-to-digital conversion of the received signal allows the DSP **1580** to perform more complex communications functions, such as demodulation and decoding. In a similar manner, signals to be transmitted to the network **1401** are processed (e.g. modulated and encoded) by the DSP **1580** and are then provided to the transmitter **1520** for digital to analog conversion, frequency up conversion, filtering, amplification and transmission to the communication network **1401** (or networks) via the antenna **1560.**

In addition to processing communications signals, the DSP **1580** provides for control of the receiver **1500** and the transmitter **1520.** For example, gains applied to communications signals in the receiver **1500** and transmitter **1520** may be adaptively controlled through automatic gain control algorithms implemented in the DSP **1580**.

In a data communications mode, a received signal, such as a text message or web page download, is processed by the communications subsystem **1001** and is input to the processing device **1800.** The received signal is then further processed by the processing device **1800** for an output to the display **1600,** or alternatively to some other auxiliary I/O device **1060.** A device user may also compose data items, such as e-mail messages, using the key pad **1400** and/or some other auxiliary I/O device **1060,** such as a touchpad, a rocker switch, a thumb-wheel, track ball, or some other type of input device. The composed data items may then be transmitted over the communications network 1401 via the communications subsystem 1001.

In a voice communications mode, overall operation of the device is substantially similar to the data communications mode, except that received signals are output to a speaker 1100, and signals for transmission are generated by a microphone 1120. Alternative voice or audio I/O subsystems, such as a voice massage recording subsystem, may also be implemented on the device 1000. In addition, the display 1600 may also be utilized in voice communications mode, for example to display the identity of a calling party, the duration of a voice call, or other voice call related information.

The short-range communications subsystem enables communication between the mobile device 1000 and other proximate systems or devices, which need not necessarily be similar devices. For example, the short-range communications subsystem may include an infrared device and associated circuits and components, or a Bluetooth^{™} communications module to provide for communication with similarly-enabled, systems and devices.

## Claims

1. A wireless communications system (30) comprising:
an advertising server (35); and
at least one mobile wireless communications device (33) comprising
an output device (32),
a position determining device (33) to determine a position of the device when driving, and
a processor (34) configured to
obtain at least one advertisement from said advertising server,
obtain a current driving location of said at least one mobile wireless communications device from said position determining device,
output at least one advertisement via said output device,
output, via said output device, navigation information, including road intersection information, for a route from the current location to a destination location, and
stop output of the at least one advertisement while said at least one mobile wireless communications device is moving and within a given distance of an intersection.

2. The wireless communications system (30) of Claim 1 wherein said output device (32) comprises a display.

3. The wireless communications system (30) of Claim 2 wherein said processor (34) is configured to display on said display a point-of-interest (POI) icon corresponding to the at least one advertisement.

4. The wireless communications system (30) of Claim 3 wherein said at least one mobile wireless communications device (33) comprises an input device (41'); wherein the POI icon is selectable based upon said input device; and wherein said processor (34) updates the navigation information to include a location associated with the POI icon based upon selection thereof.

5. The wireless communications system (30) of Claim 1 wherein:
said at least one mobile wireless communications device (33) comprises an input device (41'); said processor (34) is configured to output navigation information for the destination location in response to acknowledgement of the at least one advertisement provided via said input device, the
destination location being based on the at least one advertisement provided.

6. The wireless communications system (30) of Claim 5 wherein said processor (34) outputs the at least one advertisement at a recurring time interval.

7. The wireless communications system (30) of Claims 1 and 2 wherein said output device (32) comprises an audio output device, and wherein the navigation information comprises audio navigation information, and the at least one advertisement comprises at least one audio advertisement; and wherein said processor (34) is configured to output the audio navigation information via said audio output device (32).

8. The wireless communications system (30) of Claim 1 at least one of said advertising server (35) and said processor (34) is configured to select the at least one advertisement from a plurality of advertisements, the selection being based upon the current location.

9. The wireless communications system (30) of Claim 1 wherein the at least one advertisement comprises a plurality of different advertisements; and wherein at least one of said advertising server (35) and said processor (34) selects the advertisements based upon a user preference profile associated with said at least one mobile wireless communications device (33).

10. The wireless communications system (3) of Claim 1 wherein said destination location is based upon the at least one advertisement being output.

## Patentansprüche

1. Ein drahtloses Kommunikationssystem (30), das Folgendes beinhaltet:
einen Werbeserver (35); und
mindestens eine mobile drahtlose Kommunikationsvorrichtung (33), die Folgendes beinhaltet:
eine Ausgabevorrichtung (32),
eine Positionsbestimmungsvorrichtung (33), um eine Position der Vorrichtung beim Fahren zu bestimmen, und
einen Prozessor (34), der für Folgendes konfiguriert ist:
Erhalten mindestens einer Werbung von dem Werbeserver,
Erhalten eines aktuellen Fahrstandorts der mindestens einen mobilen drahtlosen Kommunikationsvorrichtung von der Positionsbestimmungsvorrichtung,
Ausgeben mindestens einer Werbung über die Ausgabevorrichtung, Ausgeben, über die Ausgabevorrichtung, von Navigationsinformationen, umfassend Straßenkreuzungsinformationen, für eine Route von dem aktuellen Standort zu einem Zielstandort, und
Stoppen der Ausgabe der mindestens einen Werbung, während sich die mindestens eine mobile drahtlose Kommunikationsvorrichtung bewegt und sich in einer gegebenen Entfernung von einer Kreuzung befindet.

2. Drahtloses Kommunikationssystem (30) gemäß Anspruch 1, wobei die Ausgabevorrichtung (32) eine Anzeige beinhaltet.

3. Drahtloses Kommunikationssystem (30) gemäß Anspruch 2, wobei der Prozessor (34) konfiguriert ist, um auf der Anzeige ein Point-of-Interest(POI)-Symbol anzuzeigen, das der mindestens einen Werbung entspricht.

4. Drahtloses Kommunikationssystem (30) gemäß Anspruch 3, wobei die mindestens eine mobile drahtlose Kommunikationsvorrichtung (33) eine Eingabevorrichtung (41') beinhaltet; wobei das POI-Symbol basierend auf der Eingabevorrichtung ausgewählt werden kann; und wobei der Prozessor (34) die Navigationsinformationen aktualisiert, um einen mit dem POI-Symbol assoziierten Standort basierend auf dessen Auswahl zu umfassen.

5. Drahtloses Kommunikationssystem (30) gemäß Anspruch 1, wobei:
die mindestens eine mobile drahtlose Kommunikationsvorrichtung (33) eine Eingabevorrichtung (41') beinhaltet;
der Prozessor (34) konfiguriert ist, um Navigationsinformationen für den Zielstandort als Reaktion auf die Bestätigung der mindestens einen über die Eingabevorrichtung bereitgestellten Werbung auszugeben, wobei der Zielstandort auf der mindestens einen bereitgestellten Werbung basiert.

6. Drahtloses Kommunikationssystem (30) gemäß Anspruch 5, wobei der Prozessor (34) die mindestens eine Werbung in einem wiederkehrenden Zeitintervall ausgibt.

7. Drahtloses Kommunikationssystem (30) gemäß den Ansprüchen 1 und 2, wobei die Ausgabevorrichtung (32) eine Audio-Ausgabevorrichtung beinhaltet, und wobei die Navigationsinformationen Audio-Navigationsinformationen beinhalten, und die mindestens eine Werbung mindestens eine Audio-Werbung beinhaltet; und wobei der Prozessor (34) konfiguriert ist, um die Audio-Navigationsinformationen über die Audio-Ausgabevorrichtung (32) auszugeben.

8. Drahtloses Kommunikationssystem (30) gemäß Anspruch 1, wobei mindestens eines von dem Werbeserver (35) und dem Prozessor (34) konfiguriert ist, die mindestens eine Werbung aus einer Vielzahl von Werbungen auszuwählen, wobei die Auswahl auf dem aktuellen Standort basiert.

9. Drahtloses Kommunikationssystem (30) gemäß Anspruch 1, wobei die mindestens eine Werbung eine Vielzahl von verschiedenen Werbungen beinhaltet; und wobei mindestens eines von dem Werbeserver (35) und dem Prozessor (34) die Werbungen basierend auf einem Benutzerpräferenzprofil auswählt, das mit der mindestens einen mobilen drahtlosen Kommunikationsvorrichtung (33) assoziiert ist.

10. Drahtloses Kommunikationssystem (3) gemäß Anspruch 1, wobei der Zielstandort auf der mindestens einen Werbung, die ausgegeben wird, basiert.

## Revendications

1. Un système de communications sans fil (30) comprenant :
un serveur de publicité (35) ; et
au moins un dispositif de communications sans fil mobile (33) comprenant
un dispositif de sortie (32),
un dispositif de détermination de position (33) pour déterminer une position du dispositif pendant la conduite, et
un processeur (34) configuré pour
obtenir au moins une publicité depuis ledit serveur de publicité,
obtenir un lieu de conduite actuel dudit au moins un dispositif de communications sans fil mobile depuis ledit dispositif de détermination de position,
fournir en sortie au moins une publicité via ledit dispositif de sortie,
fournir en sortie, via ledit dispositif de sortie, des informations de navigation, incluant des informations d'intersection d'itinéraire, pour un itinéraire allant du lieu actuel à un lieu de destination, et
arrêter l'émission de l'au moins une publicité pendant que ledit au moins un dispositif de communications sans fil mobile est en mouvement et à une certaine distance d'une intersection donnée.

2. Le système de communications sans fil (30) de la revendication 1 dans lequel ledit dispositif de sortie (32) comprend un écran.

3. Le système de communications sans fil (30) de la revendication 2 dans lequel ledit processeur (34) est configuré pour projeter sur ledit écran une icône de point d'intérêt (*point-of-interest,* POI) correspondant à l'au moins une publicité.

4. Le système de communications sans fil (30) de la revendication 3 dans lequel ledit au moins un dispositif de communications sans fil mobile (33) comprend un dispositif d'entrée (41') ; dans lequel l'icône POI est sélectionnable sur la base dudit dispositif d'entrée ; et dans lequel ledit processeur (34) met à jour les informations de navigation pour inclure un lieu associé à l'icône POI sur la base de la sélection de celles-ci.

5. Le système de communications sans fil (30) de la revendication 1 dans lequel :
ledit au moins un dispositif de communications sans fil mobile (33) comprend un dispositif d'entrée (41') ;
ledit processeur (34) est configuré pour fournir en sortie des informations de navigation pour le lieu de destination en réponse à la reconnaissance de l'au moins une publicité fournie via ledit dispositif d'entrée, le lieu de destination étant basé sur l'au moins une publicité fournie.

6. Le système de communications sans fil (30) de la revendication 5 dans lequel ledit processeur (34) fournit en sortie l'au moins une publicité à intervalle de temps régulier.

7. Le système de communications sans fil (30) de la revendication 1 et de la revendication 2 dans lequel ledit dispositif de sortie (32) comprend un dispositif de sortie audio, et dans lequel les informations de navigation comprennent des informations de navigation audio, et l'au moins une publicité comprend au moins une publicité audio ; et dans lequel ledit processeur (34) est configuré pour fournir en sortie les informations de navigation audio via ledit dispositif de sortie audio (32).

8. Le système de communications sans fil (30) de la revendication 1 dans lequel au moins un élément parmi ledit serveur de publicité (35) et ledit processeur (34) est configuré pour sélectionner l'au moins une publicité parmi une pluralité de publicités, la sélection étant basée sur le lieu actuel.

9. Le système de communications sans fil (30) de la revendication 1 dans lequel l'au moins une publicité comprend une pluralité de publicités différentes ; et dans lequel l'au moins un élément parmi ledit serveur de publicité (35) et ledit processeur (34) sélectionne les publicités sur la base d'un profil de préférences de l'utilisateur associé audit au moins un dispositif de communications sans fil mobile (33).

10. Le système de communications sans fil (3) de la revendication 1 dans lequel ledit lieu de destination est basé sur la fourniture en sortie de l'au moins une publicité.
